# DEMANDE DE BREVET EUROPEEN

(11) **EP 1 174 190 A1**
(43) Date de publication de la demande: **23.01.2002**
(21) Numéro de dépôt: 01401861.8
(22) Date de dépôt: 11.07.2001
(51) Int. Cl.: B05B 11/04, B05B 11/00, G01F 11/08

(54) **Dispositif de conditionnement et de distribution permettant de distribuer une dose variable**

(30) Priorité: 17.07.2000 FR 0009352
(71) Demandeur: L'OREAL, 75008 Paris (FR)
(72) Inventeur: Albisetti, Nicolas, 92110 Clichy (FR)
(74) Mandataire: Tanty, François

(57) **Abrégé**

L'invention concerne un dispositif de conditionnement et de distribution destiné à l'application d'un produit cosmétique et/ou de soin, notamment sur les cheveux et/ou le cuir chevelu, comportant un récipient comprenant un soufflet (6) comportant une première et une deuxième régions se rapprochant lors de sa compression.

Le soufflet permet la distribution d'une dose de produit en étant comprimé axialement.

Le dispositif comporte un organe de réglage permettant de modifier la course de compression du soufflet et la quantité de produit distribuée.

Le dispositif est agencé de telle manière que la compression du soufflet résulte d'une poussée exercée par l'utilisateur sensiblement dans l'axe de celui-ci.

## Description

La présente invention concerne les dispositifs de conditionnement et d'application d'un produit, notamment cosmétique et/ou de soin, et vise plus particulièrement ceux destinés à l'application d'un produit sur les cheveux et/ou le cuir chevelu.

On connaît par la demande de brevet français FR-A-2 684 569 un dispositif de conditionnement et de distribution comportant un récipient comprenant un soufflet et des poussoirs mobiles par rapport au récipient, permettant de comprimer le soufflet et de provoquer la distribution d'une dose de produit.

L'utilisateur est amené à se servir de son pouce et de son index pour comprimer le soufflet, en appuyant sur les poussoirs dans une direction transversale à l'axe du soufflet.

Ce dispositif est de structure relativement complexe en raison de l'utilisation des poussoirs.

De plus, lorsque le dispositif comporte un embout de distribution ayant une partie sécable, la société demanderesse a constaté que l'application du produit à la base des cheveux, avec venue de l'embout au contact du cuir chevelu, pouvait s'avérer inconfortable car l'embout est susceptible de présenter, après enlèvement de la partie sécable, un bord anguleux pouvant griffer le cuir chevelu ou accrocher les cheveux.

Il est en outre relativement difficile pour l'utilisateur, avec un tel dispositif, de contrôler précisément la distance entre l'embout et le cuir chevelu et de suivre un trajet prédéterminé, par exemple une raie formée dans les cheveux.

La présente invention a pour objet un dispositif de conditionnement et de distribution destiné notamment à l'application d'un produit cosmétique et/ou de soin, notamment sur les cheveux et/ou le cuir chevelu, qui soit de construction relativement simple et peu coûteux, d'utilisation aisée, et qui permette de faire varier la dose de produit distribuée.

Le dispositif de conditionnement et de distribution selon l'invention comporte un récipient comprenant un soufflet permettant la distribution d'une dose de produit en étant comprimé axialement, ce soufflet comprenant une première et une deuxième régions se rapprochant lors de sa compression, le dispositif comportant un organe de réglage permettant de modifier la course de compression du soufflet et la quantité de produit distribuée, le dispositif étant caractérisé par le fait qu'il est agencé de telle manière que la compression du soufflet résulte d'une poussée exercée par l'utilisateur sensiblement dans l'axe du soufflet.

De préférence, l'organe de réglage se déplace avec la première région du soufflet lors de la compression de ce dernier et comporte une surface d'arrêt apte à venir en appui sur une surface formant butée, fixe par rapport à la deuxième région du soufflet au moins lors de la compression du soufflet, de manière à imposer la course de compression maximale du soufflet, l'organe de réglage étant fixé sur le dispositif de telle sorte que le positionnement axial de ladite surface d'arrêt puisse être modifié avant la compression du soufflet, selon la quantité de produit devant être distribuée.

Grâce à l'invention, l'utilisateur peut choisir aisément et de manière reproductible la dose de produit distribuée, tout en ayant un dispositif relativement simple et peu coûteux à fabriquer.

De préférence, le soufflet communique avec un corps de flacon par l'intermédiaire d'une partie étranglée.

Une telle partie étranglée facilite la préhension du dispositif et autorise notamment, si l'embout de distribution le permet, la compression du soufflet en exerçant une poussée avec le pouce d'un côté du soufflet et avec le majeur et l'index de l'autre coté du soufflet, le majeur et l'index étant engagés dans la gorge formée autour de la partie étranglée.

Ainsi, de préférence, le dispositif comporte des première et deuxième surfaces d'appui situées respectivement de part et d'autre du soufflet, afin de permettre à l'utilisateur d'exercer une pression dans l'axe du récipient pour rapprocher lesdites surfaces d'appui et de comprimer le soufflet, la première surface d'appui se situant sur un embout de distribution ou à proximité, de telle sorte que l'utilisateur puisse distribuer le produit en tenant le dispositif d'une main et puisse également amener cette dernière au contact de la surface sur laquelle le produit doit être appliqué.

Cette configuration permet notamment à l'utilisateur de contrôler aisément avec sa main la distance séparant l'embout de distribution de la surface à traiter ou la pression d'application de l'embout sur celle-ci.

L'utilisateur peut ainsi déplacer d'une manière précise l'embout le long de la surface à traiter sans qu'il y ait contact de l'embout avec celle-ci, en s'aidant de sa main, de préférence de son pouce.

L'utilisateur peut également distribuer le produit dans son autre main avant de l'appliquer sur la surface à traiter.

De plus, en cas d'utilisation d'un embout sécable, l'utilisateur peut éviter un contact entre l'embout et la surface à traiter.

De préférence, le soufflet est réalisé d'un seul tenant avec le corps de flacon.

De préférence également, l'axe du soufflet coïncide avec celui du corps de flacon.

Le volume du corps de flacon peut être au moins dix fois supérieur à celui du soufflet lorsque ce dernier est à l'état non comprimé.

Le dispositif peut comporter des moyens de fixation de l'organe de réglage sur le dispositif permettant un réglage continu de la course en compression maximale du soufflet.

Ces moyens peuvent comporter un filetage réalisé sur le col du récipient ou sur une pièce rapportée.

Lorsqu'un filetage est utilisé, le dispositif comporte de préférence un bossage et l'organe de réglage comporte au moins un relief apte à franchir élastiquement ce bossage lors du vissage de l'organe de réglage sur le récipient, le bossage étant conformé de manière à empêcher le dévissage complet de l'organe de réglage.

Le dispositif peut également comporter une succession de reliefs situés à des niveaux différents par rapport à la première région du soufflet, et l'organe de réglage comporter au moins un élément de positionnement apte à coopérer avec ces reliefs pour immobiliser axialement l'organe de réglage dans une position axiale prédéterminée par rapport à la première région du soufflet.

De tels reliefs peuvent être constitués par une succession de nervures ménageant entre elles des gorges dans lesquelles peut s'engager l'élément de positionnement.

Dans une réalisation particulière, les nervures s'étendent chacune sur un secteur angulaire limité autour de l'axe du récipient, et l'élément de positionnement de l'organe de réglage s'étend sur un secteur angulaire choisi de manière à permettre de désengager après un mouvement de rotation autour de l'axe du récipient l'élément de positionnement des gorges formées entre lesdites nervures pour modifier le positionnement axial de l'organe de réglage et la quantité de produit distribuée lorsque le soufflet est comprimé.

Les reliefs en question peuvent être réalisés sur une pièce rapportée sur le récipient.

En variante, ces reliefs sont réalisés lors du moulage du récipient.

Dans une mise en oeuvre de l'invention, la surface formant butée est définie par une partie du dispositif.

En particulier, la surface formant butée peut être définie par une paroi transversale du récipient.

La surface formant butée peut se situer à l'intérieur du récipient.

Dans ce cas, dans une réalisation particulière, l'organe de réglage comporte une extension s'étendant à l'intérieur du soufflet, apte à prendre appui contre ladite surface formant butée lorsque le soufflet est comprimé.

De préférence, ladite extension est constituée par la partie inférieure d'une jupe intérieure d'étanchéité s'appliquant de manière étanche sur un col du récipient.

La surface formant butée peut notamment être définie par une paroi transversale sur laquelle se raccorde le soufflet.

Dans une mise en oeuvre particulière de l'invention, ladite surface formant butée est définie par une portion de la surface extérieure du récipient.

Dans une autre mise en oeuvre particulière de l'invention, la surface formant butée est définie par un pli du soufflet.

Dans ce cas, le soufflet présente avantageusement une section transversale elliptique et l'organe de réglage comporte au moins un relief définissant ladite surface d'arrêt, apte à venir en appui contre un pli du soufflet dans une position angulaire prédéterminée de l'organe de réglage par rapport au récipient et apte à se déplacer librement entre les plis du soufflet dans une autre position angulaire prédéterminée de l'organe de réglage par rapport au récipient.

Dans une réalisation particulière, l'organe de réglage comporte une paroi située à l'extérieur du récipient, définissant ladite surface d'arrêt.

De préférence, cette paroi est constituée par une jupe tubulaire de diamètre intérieur supérieur à celui du soufflet lorsque ce dernier est à l'état comprimé, cette jupe étant apte à venir en appui sur une paroi transversale du récipient sur laquelle se raccorde le soufflet.

Dans une réalisation particulière, l'organe de réglage est apte à venir s'accrocher sur une partie du récipient de manière à maintenir le soufflet à l'état comprimé pendant le stockage, ce qui facilite le conditionnement.

De préférence, l'organe de réglage comporte des dents aptes à s'encliqueter sur ladite partie du récipient, ce qui simplifie la fabrication.

Dans une réalisation particulière, l'organe de réglage est apte à s'encliqueter sur une partie du récipient ayant un bord radialement extérieur non circulaire, de manière à permettre de désengager l'organe de réglage de ladite partie du récipient après une rotation de l'organe de réglage par rapport au récipient.

De préférence, le dispositif comporte un embout de distribution porté par l'organe de réglage.

L'organe de réglage comporte alors avantageusement un passage permettant au produit contenu dans le récipient de gagner l'embout de distribution.

L'embout de distribution peut être articulé sur l'organe de réglage.

Dans ce cas, l'organe de réglage comporte de préférence une paroi périphérique permettant de masquer un orifice de sortie du produit de l'embout, lorsque ce dernier est dans une première position par rapport à l'organe de réglage, l'embout pouvant basculer pour prendre une deuxième position dans laquelle l'orifice de sortie n'est plus masqué par la paroi périphérique de l'organe de réglage, quand l'utilisateur appuie sur l'embout.

Dans une variante de réalisation, l'embout de distribution est assujetti à une paroi déformable permettant un déplacement axial relatif de l'embout de distribution par rapport à l'organe de réglage.

De préférence, cette paroi déformable présente une forme tubulaire étagée.

De préférence également, l'embout entraîne dans son déplacement relativement à l'organe de réglage un obturateur, agencé pour isoler l'intérieur du récipient de l'extérieur en l'absence d'utilisation du dispositif.

L'invention a encore pour objet un dispositif de conditionnement et de distribution comportant un récipient comprenant un soufflet, le soufflet permettant la distribution d'une dose de produit en étant comprimé axialement, et un organe de réglage permettant de modifier la course de compression du soufflet et la quantité de produit distribuée, caractérisé par le fait qu'il comporte en outre un embout de distribution et des première et seconde surfaces d'appui situées respectivement de part et d'autre du soufflet, afin de permettre à l'utilisateur d'exercer une pression dans l'axe du récipient pour rapprocher lesdites surfaces d'appui et de comprimer le soufflet, l'embout de distribution comportant un orifice de sortie situé à proximité de la première surface d'appui, sur le côté du dispositif.

L'invention a encore pour objet un dispositif de conditionnement et de distribution comportant un récipient comprenant un soufflet, le soufflet permettant la distribution d'une dose de produit en étant comprimé axialement, et un organe de réglage permettant de modifier en continu la course de compression du soufflet et la quantité de produit distribuée, caractérisé par le fait qu'il est agencé de telle manière que la compression du soufflet résulte d'une poussée axiale exercée par l'utilisateur sur le soufflet.

L'invention a encore pour objet un dispositif de conditionnement et de distribution comportant un récipient comprenant un soufflet, le soufflet permettant la distribution d'une dose de produit en étant comprimé axialement, et un organe de réglage permettant de modifier la course de compression du soufflet et la quantité de produit distribuée, caractérisé par le fait qu'il est agencé de telle manière que la compression du soufflet résulte d'une poussée axiale exercée par l'utilisateur sur le soufflet et par le fait que le soufflet communique avec un corps de flacon par l'intermédiaire d'une partie étranglée.

L'invention a encore pour objet un dispositif de conditionnement et de distribution comportant un récipient comprenant un soufflet, le soufflet permettant la distribution d'une dose de produit en étant comprimé axialement, et un organe de réglage permettant de modifier la course de compression du soufflet et la quantité de produit distribuée, caractérisé par le fait qu'il est agencé de telle manière que la compression du soufflet résulte d'une poussée exercée par l'utilisateur sensiblement dans l'axe du soufflet et par le fait qu'il est dépourvu de valve.

L'invention a encore pour objet un dispositif de conditionnement et de distribution comportant un récipient comprenant un soufflet, le soufflet permettant la distribution d'une dose de produit en étant comprimé axialement, et un organe de réglage permettant de modifier la course de compression du soufflet et la quantité de produit distribuée, caractérisé par le fait qu'il est agencé de telle manière que la compression du soufflet résulte d'une poussée exercée par l'utilisateur au moyen de son pouce.

L'invention sera mieux comprise à la lecture de la description détaillée qui va suivre, d'exemples de réalisation non limitatifs, et à l'examen du dessin annexé, sur lequel :
- la figure 1 est une vue schématique en coupe axiale d'un dispositif conforme à un premier exemple de mise en oeuvre de l'invention,
- la figure 2 est une vue analogue à la figure 1, représentant le dispositif tête en bas, lors de son utilisation,
- la figure 3 est une vue schématique et partielle en perspective représentant un dispositif conforme à un deuxième exemple de mise en oeuvre de l'invention,
- la figure 4 est une coupe schématique axiale d'un dispositif conforme à un troisième exemple de mise en oeuvre de l'invention,
- la figure 5 est une vue analogue à la figure 4, représentant le dispositif en cours d'utilisation,
- la figure 6 est une vue analogue à la figure 5, représentant un dispositif conforme à un quatrième exemple de mise en oeuvre de l'invention,
- la figure 7 est une vue schématique et partielle en perspective, avec arrachement, d'un dispositif conforme à un cinquième exemple de mise en oeuvre de l'invention,
- la figure 8 est une vue schématique en perspective de la partie supérieure du dispositif de la figure 7,
- la figure 9 est une coupe axiale schématique d'un dispositif conforme à un sixième exemple de mise en oeuvre de l'invention,
- la figure 10 est une coupe transversale selon le trait de coupe X-X de la figure 8,
- la figure 11 est une coupe transversale selon le trait de coupe XI-XI de la figure 8,
- la figure 12 est une coupe transversale selon le trait de coupe XII-XII de la figure 8,
- la figure 13 représente le dispositif de la figure 8 après modification du positionnement de l'organe de réglage, et
- les figures 14 et 15 illustrent l'utilisation du dispositif de la figure 4 pour appliquer un produit sur les cheveux.

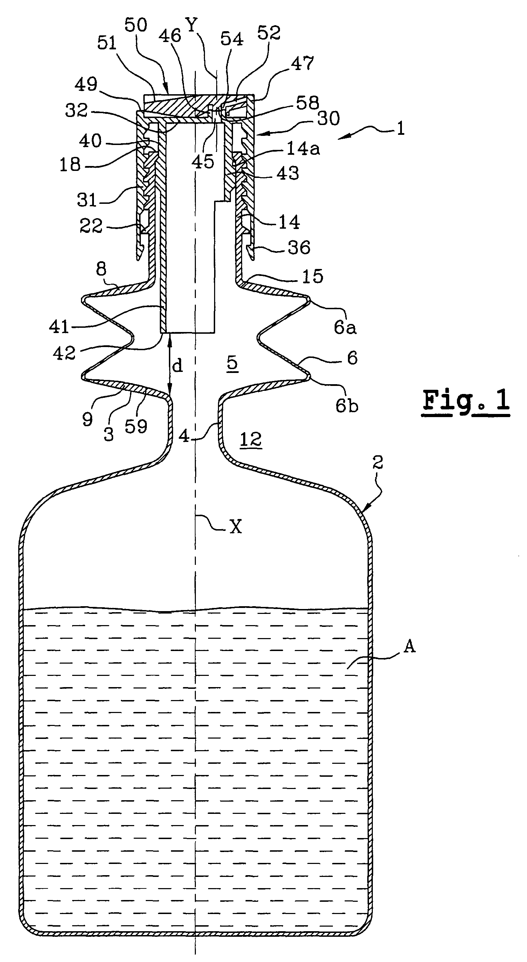

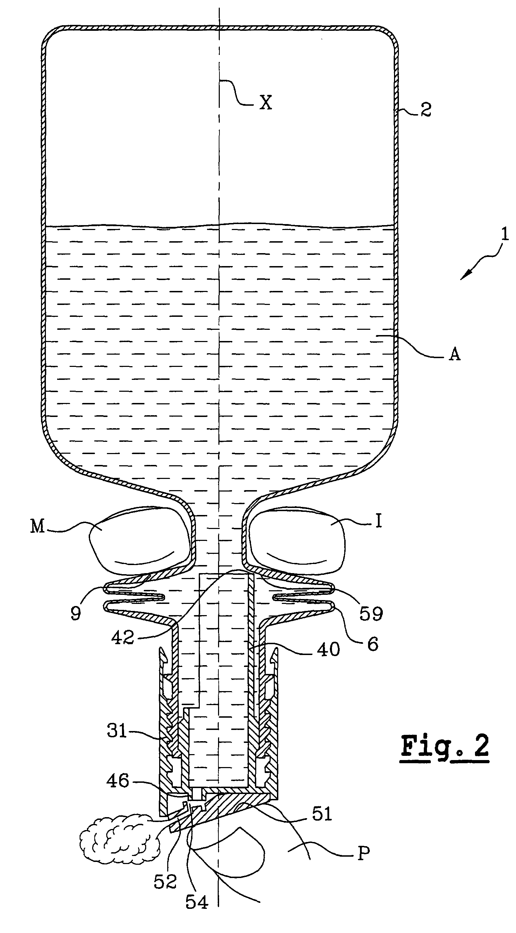

Le dispositif de conditionnement et de distribution 1 représenté aux figures 1 et 2 comporte un récipient comprenant à sa partie inférieure un corps de flacon 2 et à sa partie supérieure un soufflet 6 à mémoire de forme, d'axe X, avec une partie étranglée 4 entre les deux.

Le soufflet 6 définit un espace intérieur 5 de volume variable, servant à distribuer une dose de produit, comme cela sera précisé dans la suite.

Le corps de flacon 2 contient un produit A qui peut être un liquide plus ou moins visqueux, voire une pâte.

Dans l'exemple de réalisation décrit, le produit A est constitué par un shampooing ou un autre produit pour les cheveux ou le cuir chevelu.

Le soufflet 6 se raccorde supérieurement, par une première région 6a, à une paroi transversale 8, laquelle est prolongée vers le haut par un col 14 d'axe X.

Le soufflet 6 se raccorde inférieurement, par une deuxième région 6b, à une paroi transversale 9 prolongeant vers le haut la partie étranglée 5.

Le soufflet 6 comporte dans l'exemple décrit une pliure située sensiblement à mi-distance des parois transversales 8 et 9.

La paroi du soufflet 6 présente une épaisseur réduite par rapport aux parois transversales 8 et 9.

Le corps de flacon 2 forme, avec la paroi transversale 9, une gorge annulaire 12 autour de la partie étranglée 4, dans laquelle peuvent être introduits le majeur M et l'index I de l'utilisateur, comme illustré sur la figure 2.

La face inférieure de la paroi transversale 9 définit alors une surface d'appui 3 pour le majeur M et l'index I de l'utilisateur.

Le col 14 comporte un filetage extérieur 19 s'étendant sensiblement sur la moitié de sa longueur à partir de son extrémité supérieure 18.

Un bossage annulaire 22, dont le rôle sera précisé dans la suite, est réalisé sous le filetage 19 sur la surface extérieure du col 14.

Le col 14 présente une surface intérieure symétrique de révolution autour de l'axe X, avec un léger décrochement 14a vers l'intérieur au voisinage de son extrémité supérieure 18.

Le dispositif 1 comporte un organe de réglage 30 vissé sur le col 14.

Cet organe de réglage 30 comprend une jupe de montage 31, extérieure, et une jupe intérieure 40, engagée à l'intérieur de col 14, les deux jupes 31 et 40 étant coaxiales et réunies à leur extrémité supérieure par une paroi transversale 32.

La jupe de montage 31 est filetée intérieurement sur les deux tiers environ de sa longueur à partir de la paroi transversale 32 et comporte à son extrémité inférieure, sur sa surface radialement intérieure, des dents 36 conformées pour franchir par déformation élastique le bossage 22 du col 14.

Les dents 36 sont conformées de manière à empêcher le dévissage complet de la jupe de montage 31, en venant en butée contre la face inférieure du bossage 22, sensiblement perpendiculaire à l'axe X.

La jupe intérieure 40 comporte une partie supérieure élargie 43, conformée pour s'appliquer de manière étanche sur la surface intérieure du col 14 au voisinage de l'extrémité supérieure 18 de ce dernier.

En vissant ou dévissant l'organe de réglage 30 sur le col 14, on provoque un déplacement axial de la jupe intérieure 40 dans celui-ci.

La longueur de la partie supérieure 43 est choisie de telle sorte qu'elle reste en contact étanche avec la surface intérieure du col 14 sur toute la course de réglage, que l'organe de réglage 30 soit entièrement vissé sur le col 14, la paroi transversale 32 venant alors en appui sur l'extrémité 18 de celui-ci, ou dévissé au maximum, les dents 36 venant en appui contre le bossage 22.

La jupe intérieure 40 est prolongée vers le bas, au-delà de la partie supérieure élargie 43, par une partie inférieure 41 de moindre diamètre que celle-ci, ajourée longitudinalement, dont l'extrémité inférieure 42 définit une surface d'arrêt au sens de l'invention.

Lors de la compression du soufflet 6, la jupe intérieure 40 vient en appui par son extrémité inférieure 42 contre la paroi transversale 9, dont la face supérieure 59 définit une surface formant butée au sens de l'invention.

La paroi transversale 32 comporte un orifice 45 excentré, d'axe Y parallèle à l'axe X, entouré par une lèvre annulaire 46 dirigée vers le haut.

L'organe de réglage 30 comporte, au-dessus de la paroi transversale 32, une paroi périphérique 47 définissant un logement pour recevoir un embout de distribution 50.

La paroi périphérique 47 définit, du côté opposé à l'orifice 45, une ouverture 49 permettant à l'utilisateur d'appuyer sur l'embout 50, comme cela sera précisé plus loin.

Dans l'exemple de réalisation décrit, l'embout 50 est articulé sur l'organe de réglage 30 autour d'un axe géométrique de rotation perpendiculaire à l'axe X et au plan de coupe de la figure 1.

L'embout 50 comporte un logement 54 dans lequel s'engage la lèvre annulaire 46, avec une possibilité de déplacement selon l'axe Y.

Un picot d'obturation 58 est réalisé dans le fond du logement 54 pour obturer de manière étanche le passage défini par la lèvre 46 lorsque l'embout occupe la position de fermeture représentée sur la figure 1.

Un canal de sortie 52 est réalisé dans l'embout 50 et communique avec le logement 54 précité.

L'extrémité extérieure de ce canal de sortie 52 est masquée par la paroi périphérique 47 lorsque l'embout 50 est dans sa position de fermeture.

La face supérieure de l'embout 50 définit, du côté de l'ouverture 49, une surface d'appui 51 permettant à l'utilisateur de comprimer le soufflet 6 avec son pouce P, comme illustré sur la figure 2.

Lorsque l'utilisateur exerce une pression sur la surface d'appui 51, l'embout 50 bascule tout d'abord ce qui permet au canal de sortie 52 de se dégager de la paroi périphérique 47.

Ensuite, le soufflet 6 se déforme jusqu'à ce que la jupe intérieure 40 vienne en butée par son extrémité inférieure 42 contre la paroi transversale 9.

Préalablement à l'utilisation du dispositif 1, l'utilisateur peut régler la distance *d* entre l'extrémité inférieure 42 de la jupe intérieure 40 et la paroi transversale 9, en vissant plus ou moins l'organe de réglage 30 sur le col 14.

La visualisation de la quantité correspondant au réglage peut se faire, par exemple, au moyen de graduations inscrites sur le col 14, ces graduations étant progressivement découvertes au fur et à mesure que l'organe de réglage 30 est dévissé et donc que la course de compression du soufflet 6 est importante.

La compression du soufflet 6 provoque une diminution du volume intérieur du récipient et la compression de l'air au-dessus du produit A, ce qui entraîne son expulsion par le canal de sortie 52.

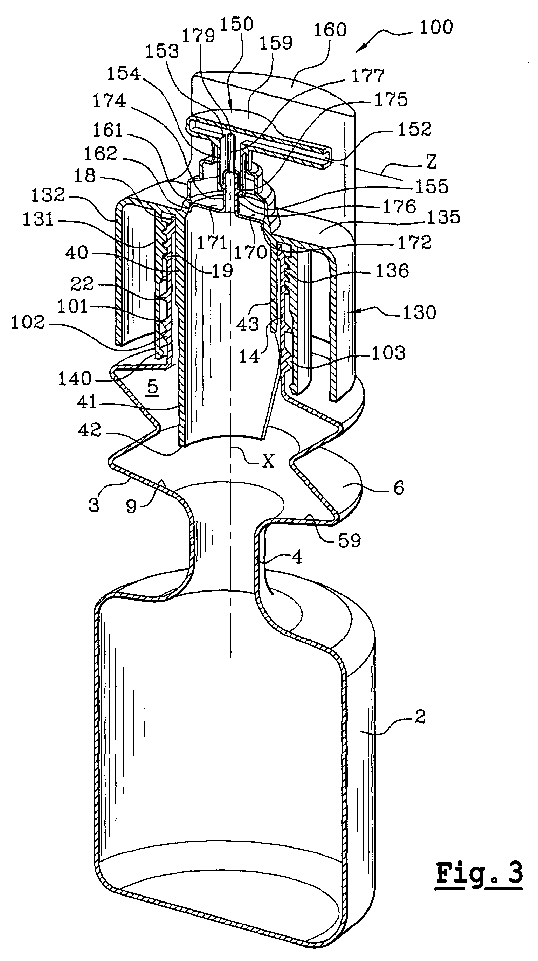

On a représenté sur la figure 3 un dispositif 100 qui comporte un récipient ne différant de celui décrit précédemment que par la présence sur le col 14, sous le bossage annulaire 22, de deux bourrelets 101 et 102 formant entre eux une gorge annulaire 103 dont le rôle sera précisé plus loin.

Le dispositif 100 comporte un organe de réglage 130 comprenant une jupe intérieure 40, identique à celle décrite en référence à la figure 1, une jupe de montage 131, extérieure au col 14, et une jupe extérieure d'habillage 132.

Les jupes intérieure 40, de montage 131 et extérieure 132 sont réunies supérieurement par une paroi transversale 135.

La jupe de montage 131 comporte un filetage intérieur 136 venant en prise avec le filetage 19 du col 14 et, à son extrémité inférieure, un bossage annulaire 140 apte à franchir par déformation élastique le bossage 22 et les bourrelets 101 et 102.

Le bossage 22 s'oppose comme dans l'exemple précédemment décrit, au dévissage complet de l'organe de réglage 130, compte-tenu de l'inclinaison de sa face inférieure.

Les bourrelets 101 et 102 peuvent être franchis par bossage 140 dans les deux sens et ce dernier peut se loger dans la gorge annulaire 103.

Le point dur lié au franchissement du bourrelet 101 ou 102 renseigne l'utilisateur sur la position axiale de l'organe de réglage 130 par rapport au col 14.

La gorge annulaire 103 correspond à un positionnement axial prédéterminé de l'organe de réglage 130 sur le col 14, pour distribuer une dose moyenne par exemple.

L'organe de réglage 130 comporte, au-dessus de la paroi transversale 135, un embout de distribution 150, situé entre deux extensions latérales 160, dont une seule est visible sur la figure 3.

L'embout de distribution 150 se raccorde à la paroi transversale 135 par une paroi tubulaire étagée 161.

Cette paroi tubulaire étagée se raccorde à la paroi transversale 135 par une paroi tronconique 162 servant de siège à un obturateur 170.

L'embout 150 comporte un canal de sortie 152, d'axe Z perpendiculaire à l'axe X.

L'espace intérieur à la paroi tubulaire étagée 161 et le canal de sortie 152 communiquent par un orifice 153 d'axe X, qui permet d'alimenter le canal de sortie 152 en produit.

Plusieurs pattes d'accrochage 154 s'étendent vers le bas autour de l'orifice 153 et comportent chacune à leur extrémité inférieure, et sur leur face radialement intérieure, une dent 155.

L'obturateur 170 comporte un plateau 171 pourvu d'un rebord 172 dirigé vers le bas, apte à s'appliquer de manière étanche sur la paroi tronconique 162, et une tige 174 prolongeant vers le haut le plateau 171.

La tige 174 comporte une partie inférieure élargie 176 pourvue d'un bourrelet annulaire 175 apte à s'encliqueter entre les pattes 154 au-dessus des dents 155 et, au-dessus de cette partie élargie 176, une partie supérieure 177 de diamètre nettement inférieur à celui de l'orifice 153, se prolongeant jusqu'au voisinage de la paroi supérieure 159 de l'embout 150.

Au repos, c'est-à-dire dans la configuration représentée à la figure 3, la paroi tubulaire étagée 161 est totalement déployée et le plateau 171 s'applique par le rebord 172 de manière étanche sur la paroi tronconique 162.

L'intérieur du récipient est ainsi isolé de l'extérieur.

La paroi supérieure 159 de l'embout 150 définit une surface d'appui pour l'utilisateur, dont le niveau se situe sous l'extrémité supérieure des extensions latérales 160, de sorte que l'embout 150 se trouve ainsi protégé contre un enfoncement accidentel.

Les extensions latérales 160 contribuent également à faciliter le positionnement du doigt de l'utilisateur sur l'embout 150.

Pour distribuer du produit, l'utilisateur positionne le dispositif 100 tête en bas et appuie sur l'embout de distribution 150, ce qui a pour effet de provoquer dans un premier temps la déformation de la paroi tubulaire 161 compte tenu du fait qu'elle oppose dans l'exemple décrit une résistance à l'enfoncement plus faible que la force nécessaire pour comprimer le soufflet 6.

Au cours de cette déformation de la paroi tubulaire 161, la partie supérieure 177 vient en appui, par son extrémité supérieure 179, contre la paroi supérieure 159, ce qui provoque l'écartement de l'obturateur 171 de son siège et permet au produit de gagner le canal de sortie 152.

Une fois que l'embout de distribution 150 est complètement enfoncé, la pression exercée sur celui-ci se transmet à l'organe de réglage 30 et au col 14, et le soufflet 6 est comprimé jusqu'à ce que l'extrémité inférieure 42 de la jupe intérieure 40 vienne en butée sur la paroi transversale 9, comme dans l'exemple de réalisation précédent.

On comprend qu'en disposant dans la partie étranglée 4 un clapet associé éventuellement à un tube plongeur dont l'extrémité inférieure débouche dans le fond du corps de flacon 2, du produit peut être pompé dans l'espace intérieur 5 à chaque détente du soufflet.

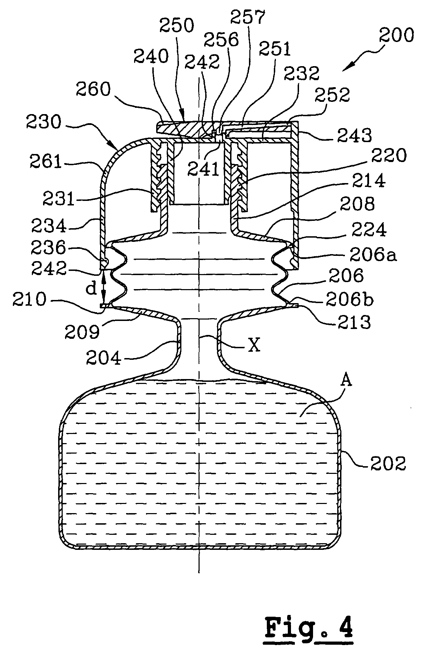

On a représenté sur la figure 4 un dispositif 200 comprenant un récipient comportant à sa partie inférieure un corps de flacon 202 et à sa partie supérieure un soufflet 206.

Le récipient comporte également une partie étranglée 204 entre le corps de flacon 202 et le soufflet 206, cette partie étranglée 204 étant prolongée supérieurement par une paroi transversale 209.

Le soufflet 206 se raccorde supérieurement par une première région 206a à une paroi transversale 208, laquelle est prolongée vers le haut par un col 214, ce dernier comportant un filetage extérieur 220 à sa partie supérieure.

Le soufflet 206 se raccorde inférieurement par une seconde région 206b sur la paroi transversale 209, légèrement en retrait de son bord périphérique 213, de manière à former une collerette 210 dont le rôle sera précisé plus loin.

Le dispositif 200 comporte un organe de réglage 230, lequel comprend une jupe extérieure 234, cette dernière entourant une jupe de montage 231 filetée intérieurement et vissée sur le col 214.

L'organe de réglage 230 comporte également une jupe intérieure 230 apte à s'appliquer de manière étanche sur la surface intérieure du col 214.

La jupe extérieure 234 est pourvue à son extrémité inférieure et sur sa surface radialement intérieure de dents 236.

La paroi transversale 208 présente sur son bord radialement extérieur une crête annulaire 224, de diamètre extérieur correspondant sensiblement au diamètre intérieur de la jupe extérieure 234, conformée pour être franchie aisément par les dents 236 lorsque l'organe de réglage 230 est vissé sur le col 214 et ayant une face inférieure sensiblement perpendiculairement à l'axe X, de manière à empêcher le dévissage complet de l'organe de réglage 230.

La jupe de montage 231 et la jupe intérieure 240 se raccordent à une paroi transversale 232 traversée par un orifice 241.

Ce dernier est entouré par une lèvre annulaire 242 s'étendant au-dessus de la paroi transversale 232.

L'organe de réglage 230 comporte au-dessus de la paroi transversale 232 une paroi périphérique 243 définissant un logement dans lequel est fixé un embout de distribution 250, celui-ci étant articulé sur la paroi périphérique 243 autour d'un axe géométrique de rotation perpendiculaire à l'axe X et au plan de la figure 4.

L'embout 250 comporte un canal de sortie 251 dont l'extrémité 252 se situe devant la paroi périphérique 243 lorsque l'embout 250 est dans sa position de fermeture, correspondant à la figure 4.

L'embout 250 comporte un logement 256 dans lequel s'engage la lèvre annulaire 242, pourvu d'un picot d'obturation 257 venant obturer le passage défini par la lèvre annulaire 242 lorsque l'embout 250 est dans sa position de fermeture.

La paroi périphérique 243 est ajourée, du côté opposé à l'extrémité 252, afin de permettre à l'utilisateur d'appuyer sur une surface d'appui 260 définie par la face supérieure de l'embout.

La jupe extérieure 234 se raccorde à la paroi transversale 232 du côté de la surface d'appui 260 par un arrondi 261, rendant plus confortable pour l'utilisateur l'actionnement du dispositif.

La jupe extérieure 234 est apte à prendre appui, par son extrémité inférieure 242, sur la collerette 210 lorsque le soufflet 206 est comprimé axialement.

En vissant plus ou moins la jupe de montage 231 sur le col 214, on peut régler la distance *d* conditionnant la course de compression maximale du soufflet 206.

Lorsque l'utilisateur appuie sur l'embout de distribution 250, celui-ci pivote de manière à amener l'extrémité 252 du canal de sortie au-dessus de la paroi périphérique 243, à l'instar du mode de réalisation des figures 1 et 2 décrit précédemment, puis le soufflet 206 est comprimé.

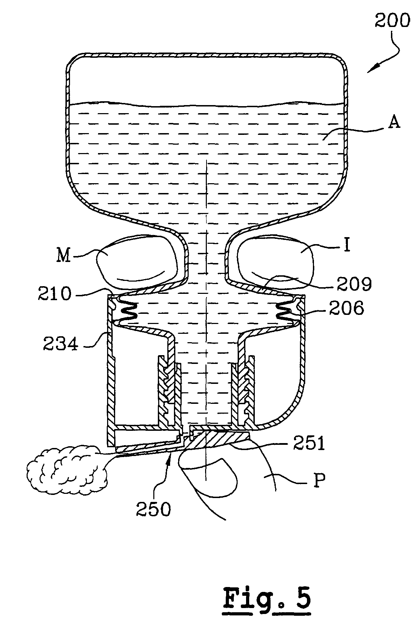

On a représenté sur la figure 5 le dispositif 200 lorsque la jupe extérieure 234 vient en butée contre la collerette 210, en fin de compression du soufflet 206.

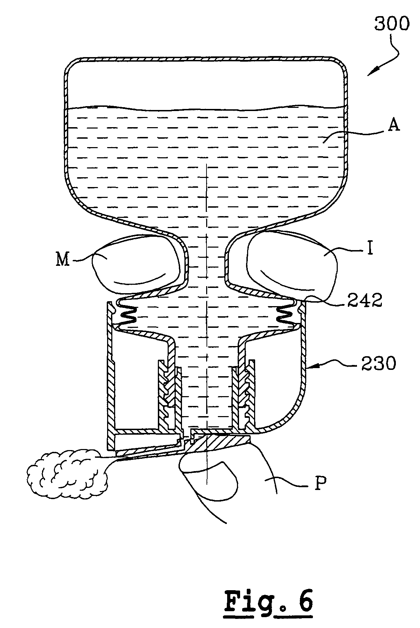

Le dispositif 300 représenté à la figure 6 diffère de celui décrit en référence aux figures 4 et 5 par l'absence de collerette 210, la surface formant butée au sens de l'invention étant définie par les doigts de l'utilisateur.

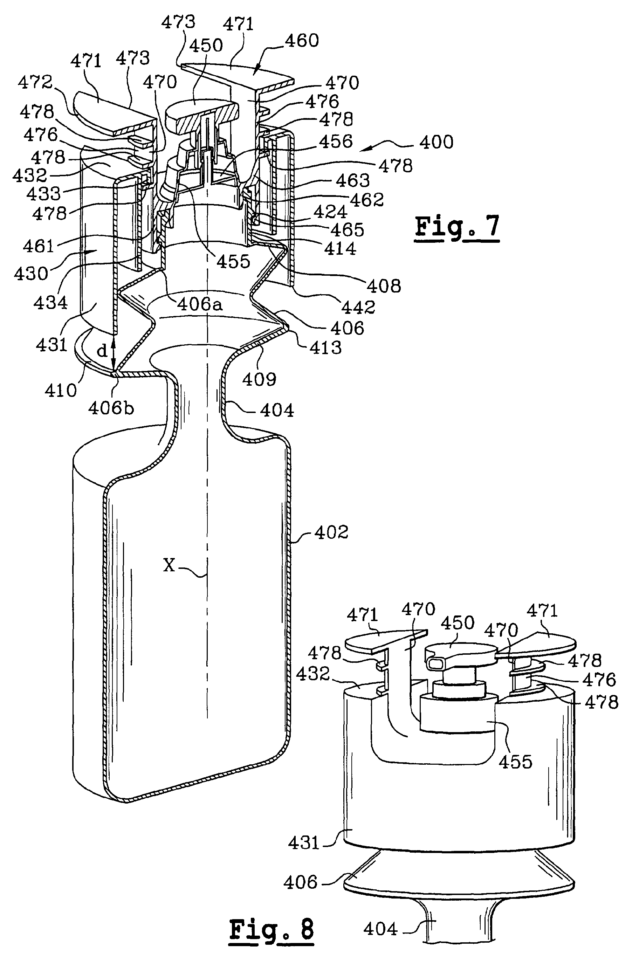

Le dispositif 400 représenté à la figure 7 comporte un récipient comprenant en partie inférieure un corps de flacon 402 et en partie supérieure un soufflet 406, d'axe X, relié au corps de flacon 402 par une partie étranglée 404.

Cette dernière est prolongée supérieurement par une paroi transversale 409.

Le soufflet 406 se raccorde supérieurement par une première région 406a à une paroi transversale 408 prolongée vers le haut par un col 414, d'axe X.

Le soufflet 406 se raccorde à la paroi transversale 409 par une deuxième région 406b légèrement en retrait de son bord périphérique 413, de manière à former une collerette 410 à l'instar du dispositif décrit en référence aux figures 4 et 5.

Le col 414 diffère de ceux des exemples précédents par le fait qu'il ne comporte pas de filetage extérieur mais un simple bossage annulaire 424.

Le dispositif 400 comporte un organe de réglage 430 comprenant une jupe extérieure 431, d'axe X, apte à prendre appui par son extrémité inférieure 442 contre la collerette 410 lorsque le soufflet 406 est comprimé.

La jupe extérieure 431 se raccorde supérieurement à une paroi transversale 432, comportant de son côté intérieur un rebord 433 dirigé vers le bas.

L'organe de réglage 430 comporte une jupe intérieure 434 se raccordant supérieurement à la paroi transversale 432 et de moindre hauteur que la jupe extérieure 431, de manière à ne pas venir en appui sur le soufflet 406.

Le dispositif 400 comporte un ensemble de distribution 460, comprenant une jupe de montage 461 munie de dents 465 aptes à s'encliqueter sur le bossage 424 du col 414 et une lèvre intérieure 462 apte à s'appliquer de manière étanche sur la surface radialement intérieure du col 414.

La jupe de montage 461 et la lèvre intérieure 462 se raccordent supérieurement à une paroi annulaire 463, prolongée vers le haut, en deux emplacements diamétralement opposés, par des montants latéraux 470, parallèles à l'axe X.

Les montants 470 sont pourvus à leur extrémité supérieure d'ailettes transversales 471, dirigées vers l'extérieur, présentant un bord radialement extérieur 472 circulaire d'axe X, de rayon sensiblement égal à celui de la jupe extérieure 431.

Les ailettes 472 présentent des bords intérieurs rectilignes 473, se faisant face, parallèles et ménageant entre eux une ouverture permettant à l'utilisateur d'appuyer sur un embout de distribution 450 situé entre les montants 470, comme on peut le voir sur la figure 8.

L'embout de distribution 450 présente une structure identique à l'embout 150 décrit en référence à la figure 3 et se raccorde à la paroi annulaire 463 par une paroi tubulaire étagée 455, identique à la paroi 161 précédemment décrite.

Un obturateur 456 est solidaire de l'embout 450, cet obturateur 456 étant identique à l'obturateur 171 précédemment décrit.

L'ensemble de distribution 460 est réalisé, à l'exception de l'obturateur 456 qui est rapporté ultérieurement, d'un seul tenant par moulage de matière thermoplastique.

Les montants 470 comportent sur leur face radialement extérieure une succession de nervures 478, définissant entre elles des gorges 476 situées à des niveaux différents suivant l'axe X.

La hauteur de ces gorges 476, c'est-à-dire la distance entre deux nervures 478 successives, correspond sensiblement à la hauteur des rebords 433.

Le rebord 433 s'étend sur un secteur angulaire limité, de manière à permettre de désaccoupler axialement l'organe de réglage 430 et l'ensemble de distribution 460.

L'utilisateur peut ainsi, en faisant tourner l'organe de réglage 430 relativement à l'ensemble de distribution 460, amener celui-ci dans une position dans laquelle les rebords 433 sortent des gorges 476, ce qui permet un déplacement axial de l'organe de réglage 430 relativement à l'ensemble de distribution 460.

On remarquera que la jupe intérieure 434 présente un diamètre intérieur correspondant sensiblement au diamètre extérieur des nervures 478.

L'organe de réglage 430 peut être positionné dans l'exemple décrit à quatre niveaux différents, le niveau inférieur étant défini par la venue de la jupe intérieure 434 en appui sur la paroi transversale 408.

Selon le niveau choisi, la distance *d* entre l'extrémité inférieure de la jupe extérieure 431 et la collerette 410 est différente, ce qui permet d'expulser une dose plus ou moins importante de produit lorsque le soufflet 406 est comprimé.

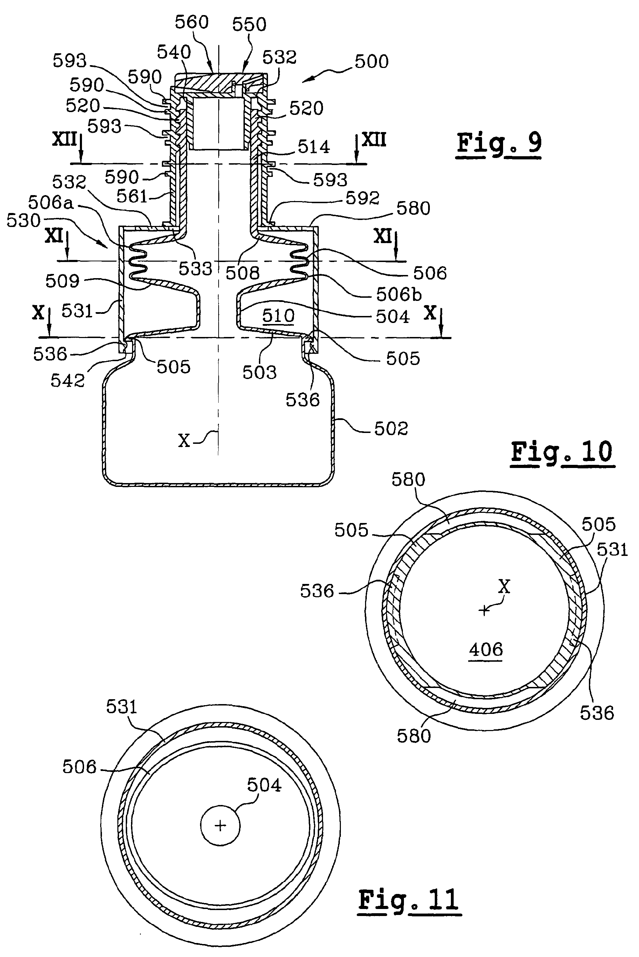

On va maintenant décrire en référence aux figures 9 à 13 un dispositif 500 qui comporte un récipient comprenant en partie inférieure un corps de flacon 502 et en partie supérieure un soufflet 506 et, entre les deux, une partie étranglée 504.

Le soufflet 506 se raccorde supérieurement par une première région 506a à une paroi transversale 508 prolongée vers le haut par un col 514.

Le soufflet 506 se raccorde inférieurement par une deuxième région 506b à une paroi transversale 509, laquelle prolonge supérieurement la partie étranglée 504.

Le col 514 comporte deux parties filetées 520 extérieures, diamétralement opposées.

Le corps de flacon 502 comporte en partie supérieure une paroi transversale 503, laquelle définit avec la paroi transversale 509 une gorge annulaire 510.

La paroi transversale 503 présente à sa périphérie deux reliefs 505 diamétralement opposés, et dont la fonction sera précisée plus loin.

Le soufflet 506 présente, en section transversale, une forme elliptique comme on peut le voir sur la figure 10.

Le dispositif 500 comporte un ensemble de distribution 560, comprenant une jupe de montage 561 vissée sur les parties filetées 520 du col 514, et une jupe intérieure 540 s'appliquant de manière étanche sur la surface radialement intérieure du col 514.

La jupe de montage 561 et la jupe intérieure 540 se raccordent supérieurement à une paroi transversale 532.

L'ensemble de distribution 560 reçoit un embout de distribution 550 identique à l'embout de distribution décrit en référence à la figure 1, la partie de l'ensemble de distribution 560 qui s'étend au-dessus de la paroi transversale 532 étant identique à celle de l'organe de réglage 30 qui s'étend au-dessus de la paroi transversale 32.

Le dispositif 500 comporte un organe de réglage 530, comprenant une jupe 531 cylindrique de révolution d'axe X, se raccordant à son extrémité supérieure à une paroi transversale 532 présentant une ouverture centrale 533 dont le diamètre intérieur correspond au diamètre extérieur de la jupe de montage 561.

Deux dents 536 sont réalisées sur la surface radialement intérieure de la jupe 531, à proximité de son extrémité inférieure, en des emplacements diamétralement opposés.

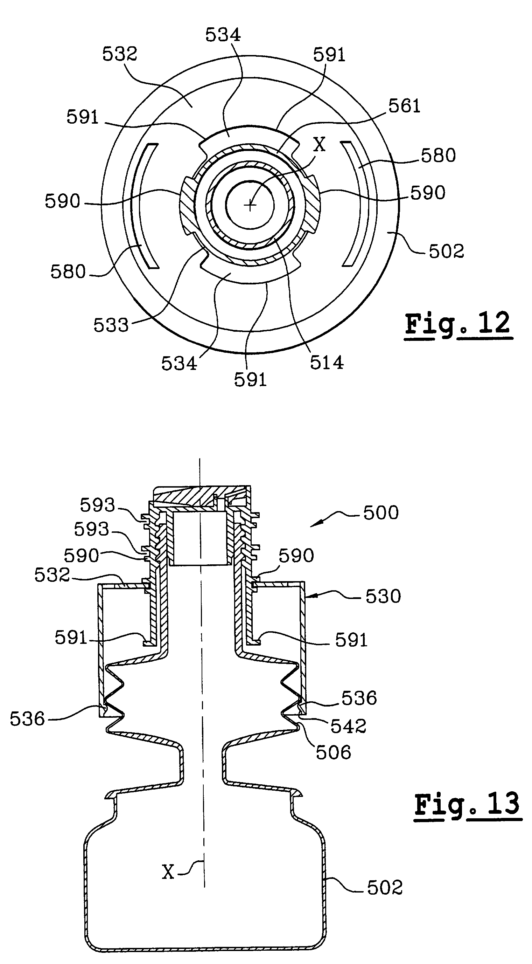

La paroi transversale 532 présente, comme on peut le voir sur la figure 12, des encoches 534, donnant sur l'ouverture centrale 533, de manière à permettre le passage des parties filetées 520 lors de la mise en place de l'organe de réglage 530 sur le col 514.

Les reliefs 505 s'étendent sur un secteur angulaire limité autour de l'axe X et ménagent entre eux, comme on peut le voir sur la figure 10, des espaces 580 dont la largeur angulaire est supérieure à celle des dents 536.

Selon la position angulaire de l'organe de réglage 530 par rapport au corps de flacon 502, les dents 536 viennent en prise sur les reliefs 505 ou non.

Ainsi, on peut maintenir le dispositif 500 dans une configuration de stockage dans laquelle le soufflet 506 est comprimé et les dents 536 viennent en appui sous les reliefs 505, comme illustré sur la figure 9.

L'encombrement du dispositif est ainsi réduit, ce qui permet de l'emballer plus aisément.

Du fait de la forme elliptique du soufflet 506 les dents 536 peuvent, selon la position angulaire de l'organe de réglage 530 par rapport au récipient, venir s'engager ou non entre les plis du soufflet 506, comme illustré sur la figure 13.

Lorsque l'organe de réglage 530 est pivoté d'un quart de tour par rapport à la position de la figure 13, les dents 536 viennent en alignement avec le petit axe de la section elliptique, lequel est suffisamment court pour que les dents 536 ne viennent pas en prise sur le soufflet 506, ce qui permet alors un déplacement libre de la jupe 531 relativement au récipient.

La paroi transversale 532 comporte des ouvertures 580 servant au moulage des dents 536.

La jupe de montage 561 comporte, sur sa surface extérieure, une succession de nervures 590 diamétralement opposées, dont deux nervures 592 à son extrémité inférieure.

Les nervures 590 situées d'un même côté sont groupées par deux, de manière à former entre elles trois gorges 593 équidistantes dans le sens de l'axe X.

La largeur de chacune de ces gorges 593 est très légèrement supérieure à l'épaisseur de la paroi transversale 532.

L'étendue angulaire des nervures 590 et 592 est inférieure à celle des encoches 534.

Le diamètre du bord radialement extérieur 591 des encoches 534 est supérieur à celui des nervures 590 ou 592.

Dans la configuration des figures 9 et 13, l'organe de réglage 530 est dans une position dans laquelle les encoches 534 sont décalées d'un quart de tour par rapport aux nervures 590 ou 592.

Dans la configuration de stockage de la figure 8, le soufflet 506 est empêché de se détendre par appui des dents 536 contre les reliefs 505.

L'organe de réglage 530 peut être amené dans cette position par encliquetage des dents 536 sur les reliefs 505, ce qui rend plus facile une fabrication automatisée.

Pour distribuer du produit, l'utilisateur tourne d'un quart de tour l'organe de réglage 530 par rapport au récipient, ce qui amène les nervures 592 à l'aplomb des encoches 534.

L'utilisateur peut déplacer vers le haut l'organe de réglage 530 jusqu'à amener la paroi transversale 532 au niveau d'un couple de gorges 593, par exemple celui le plus bas.

Ensuite, l'utilisateur tourne à nouveau d'un quart de tour l'organe de réglage 530 pour permettre aux régions de paroi transversale 532 situées entre les encoches 534 de s'engager dans les gorges 593, comme illustré à la figure 13.

Les dents 536 viennent alors se loger entre deux plis du soufflet 506.

En fonction du niveau des gorges 593 dans lesquelles est engagée la paroi transversale 532, la course de compression maximale du soufflet 506 est différente, les faces inférieures 542 des dents 536 définissant des surfaces d'arrêt au sens de l'invention.

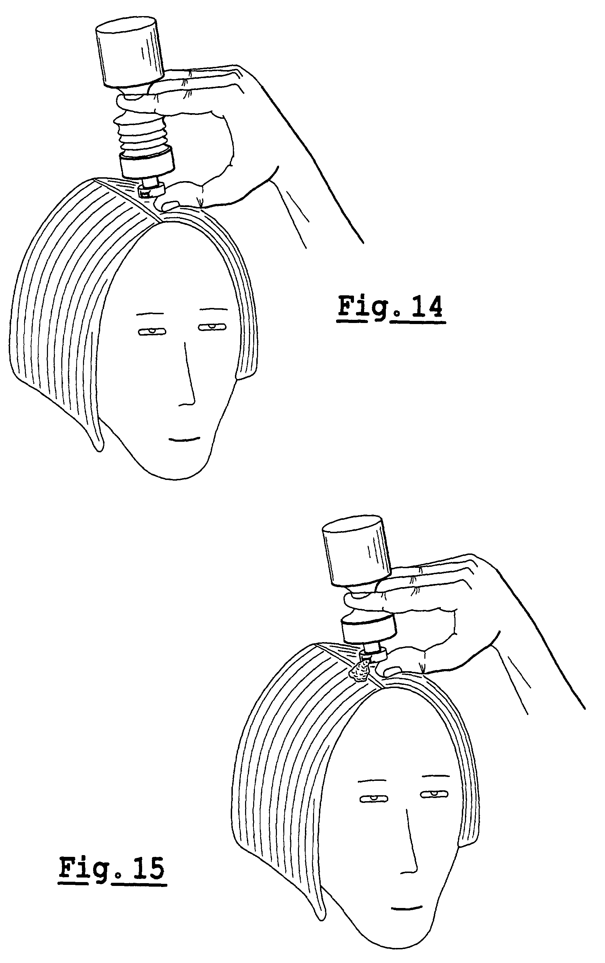

On a illustré sur les figures 14 et 15 l'utilisation du dispositif 200 de la figure 4 pour appliquer un produit sur les cheveux.

Il est possible de se servir du pouce pour appuyer sur l'embout de distribution, grâce à l'engagement du majeur et de l'index dans la gorge annulaire formée autour de partie étranglée du récipient, pour guider l'embout de distribution au contact du cuir chevelu, ce qui permet par exemple de suivre plus facilement une raie formée dans les cheveux.

Bien entendu, l'invention n'est limitée aux exemples de réalisation qui viennent d'être décrits.

On peut notamment profiter de la présence de la partie étranglée pour placer un obturateur amovible dans le récipient, l'obturateur permettant le stockage séparé de deux composants et étant déplacé à la première utilisation pour permettre le mélange des composants, par tout moyen connu en soi.

On peut également munir le dispositif d'un embout de distribution sécable.

## Revendications

1. Dispositif de conditionnement et de distribution destiné à l'application d'un produit cosmétique et/ou de soin, notamment sur les cheveux et/ou le cuir chevelu, comportant un récipient comprenant un soufflet (6 ; 206 ; 406 ; 506) comportant une première et une deuxième régions se rapprochant lors de sa compression, le soufflet permettant la distribution d'une dose de produit en étant comprimé axialement, et un organe de réglage permettant de modifier la course de compression du soufflet et la quantité de produit distribuée, **caractérisé par le fait qu'**il est agencé de telle manière que la compression du soufflet résulte d'une poussée exercée par l'utilisateur sensiblement dans l'axe du soufflet.

2. Dispositif selon la revendication 1, **caractérisé par le fait que** l'organe de réglage (30 ; 130 ; 230 ; 430 ; 530) se déplace avec la première région (6a ; 206a ; 406a ; 506a) lors de la compression du soufflet et comporte une surface d'arrêt (42 ; 242 ; 442 ; 542) apte à venir en appui sur une surface formant butée (59 ; 210 ; M, I ; 410 ; 406) fixe par rapport à la deuxième région (6b ; 206b ; 406b ; 506b) du soufflet au moins lors de la compression de ce dernier, de manière à imposer la course de compression maximale du soufflet, l'organe de réglage étant fixé sur le dispositif de telle sorte que le positionnement axial de ladite surface d'arrêt (42 ; 242 ; 442 ; 542) puisse être modifié avant la compression du soufflet, selon la quantité de produit devant être distribuée.

3. Dispositif selon la revendication 1 ou 2, **caractérisé par le fait qu'**il comporte un embout de distribution et des première (51) et seconde (3) surface situées respectivement de part et d'autre du soufflet (6), afin de permettre à l'utilisateur d'exercer une pression dans l'axe (X) du récipient pour rapprocher lesdites surfaces d'appui et de comprimer le soufflet, la première surface d'appui se situant sur l'embout de distribution (50) ou à proximité, de telle sorte que l'utilisateur puisse distribuer le produit en tenant le dispositif d'une main et puise également amener cette dernière au contact de la surface sur laquelle le produit doit être appliqué.

4. Dispositif selon l'une des revendications précédentes, **caractérisé par le fait que** le soufflet communique avec un corps de flacon (2 ; 202 ; 402 ; 502) par l'intermédiaire d'une partie étranglée (4 ; 204 ; 404 ; 504).

5. Dispositif selon la revendication précédente, **caractérisé par le fait que** le soufflet est réalisé d'un seul tenant avec le corps de flacon.

6. Dispositif selon l'une quelconque des revendications immédiatement précédentes, **caractérisé par le fait que** l'axe du soufflet coïncide avec celui du corps de flacon.

7. Dispositif selon l'une quelconque des revendications immédiatement précédentes, **caractérisé par le fait que** le volume du corps de flacon peut être au moins dix fois supérieur à celui du soufflet lorsque ce dernier est à l'état non comprimé.

8. Dispositif selon l'une quelconque des revendications précédentes, **caractérisé par le fait qu'**il comporte des moyens de fixation de l'organe de réglage sur le dispositif permettant un réglage continu de la course en compression maximale (*d*) du soufflet.

9. Dispositif selon la revendication immédiatement précédente, **caractérisé par le fait que** lesdits moyens de fixation comportent un filetage.

10. Dispositif selon l'une quelconque des revendications immédiatement précédentes, **caractérisé par le fait que** le récipient comporte un filetage et **par le fait que** l'organe de réglage est vissé sur ce filetage.

11. Dispositif selon la revendication précédente, **caractérisé par le fait que** le filetage est réalisé sur un col du récipient.

12. Dispositif selon l'une quelconque des revendications 8 à 10, **caractérisé par le fait que** le filetage est réalisé sur une pièce rapportée sur le récipient.

13. Dispositif selon l'une quelconque des revendications 8 à 12, **caractérisé par le fait qu'**il comporte un bossage (22 ; 140) et **par le fait que** l'organe de réglage comporte au moins un relief apte à franchir élastiquement ce bossage lors du vissage de l'organe de réglage sur le récipient, le bossage étant conformé de manière à empêcher le dévissage complet de l'organe de réglage.

14. Dispositif selon la revendication 2 et éventuellement l'une quelconque des revendications 3 à 7, **caractérisé par le fait qu'**il comporte une succession de reliefs situés à des niveaux différents par rapport à la première région du soufflet, et **par le fait que** l'organe de réglage comporte au moins un élément de positionnement apte à coopérer avec ces reliefs pour immobiliser axialement l'organe de réglage dans une position axiale prédéterminée par rapport à la première région du soufflet.

15. Dispositif selon la revendication précédente, **caractérisé par le fait que** lesdits reliefs sont constitués par une succession de nervures ménageant entre elles des gorges (476 ; 593) dans lesquelles peut s'engager l'élément de positionnement (433, 532).

16. Dispositif selon la revendication précédente, **caractérisé par le fait que** lesdites nervures s'étendent chacune sur un secteur angulaire limité autour de l'axe du récipient, et **par le fait que** l'élément de positionnement de l'organe de réglage s'étend sur un secteur angulaire choisi de manière à permettre de désengager après un mouvement de rotation autour de l'axe du récipient l'élément de positionnement des gorges formées entre lesdites nervures pour modifier le positionnement axial de l'organe de réglage et la quantité de produit distribuée lorsque le soufflet est comprimé.

17. Dispositif selon la revendication 14, **caractérisé par le fait que** lesdits reliefs sont réalisés sur une pièce rapportée sur le récipient.

18. Dispositif selon la revendication 14, **caractérisé par le fait que** les reliefs sont réalisés lors du moulage du récipient.

19. Dispositif selon la revendication 2 et éventuellement l'une quelconque des autres revendications précédentes, **caractérisé par le fait que** la surface formant butée (59 ; 210 ; 410 ; 506) est définie par une partie du dispositif.

20. Dispositif selon la revendication précédente, **caractérisé par le fait que** ladite surface formant butée est définie par une paroi transversale du récipient.

21. Dispositif selon l'une des deux revendications immédiatement précédentes, **caractérisé par le fait que** ladite surface formant butée (59) se situe à l'intérieur du récipient.

22. Dispositif selon la revendication précédente, **caractérisé par le fait que** l'organe de réglage comporte une extension s'étendant à l'intérieur du soufflet, apte à prendre appui contre ladite surface formant butée lorsque le soufflet est comprimé.

23. Dispositif selon la revendication précédente, **caractérisé par le fait que** ladite extension est constituée par la partie inférieure d'une jupe intérieure d'étanchéité s'appliquant de manière étanche sur un col du récipient.

24. Dispositif selon la revendication 20, **caractérisé par le fait que** ladite surface formant butée est définie par une paroi transversale sur laquelle se raccorde le soufflet.

25. Dispositif selon la revendication 2 et éventuellement l'une quelconque des revendications 3 à 20, **caractérisé par le fait que** ladite surface formant butée est définie par une portion de la surface extérieure du récipient.

26. Dispositif selon la revendication précédente, **caractérisé par le fait que** ladite surface formant butée est définie par un pli du soufflet (506).

27. Dispositif selon la revendication précédente, **caractérisé par le fait que** le soufflet (506) présente une section transversale elliptique et **par le fait que** l'organe de réglage comporte au moins un relief (536) définissant ladite surface d'arrêt, apte à venir en appui contre un pli du soufflet dans une position angulaire prédéterminée de l'organe de réglage par rapport au récipient et apte à se déplacer librement entre les plis du soufflet dans une autre position angulaire prédéterminée de l'organe de réglage par rapport au récipient.

28. Dispositif selon l'une quelconques des revendications 25 à 27, **caractérisé par le fait que** l'organe de réglage comporte une paroi située à l'extérieur du récipient, définissant ladite surface d'arrêt.

29. Dispositif selon la revendication précédente, **caractérisé par le fait que** ladite paroi est constituée par une jupe tubulaire de diamètre intérieur supérieur à celui du soufflet lorsque ce dernier est à l'état comprimé, cette jupe étant apte à venir en appui sur une paroi transversale du récipient sur laquelle se raccorde le soufflet.

30. Dispositif selon l'une quelconque des revendications précédentes, **caractérisé par le fait que** l'organe de réglage est apte à venir s'accrocher sur une partie (502) du récipient de manière à maintenir le soufflet (506) à l'état comprimé pendant le stockage.

31. Dispositif selon la revendication précédente, **caractérisé par le fait que** l'organe de réglage comporte des dents aptes à s'encliqueter sur ladite partie du récipient.

32. Dispositif selon la revendication précédente, **caractérisé par le fait que** l'organe de réglage est apte à s'encliqueter sur une partie du récipient ayant un bord radialement extérieur non circulaire, de manière à permettre de désengager l'organe de réglage de ladite partie du récipient après une rotation de l'organe de réglage par rapport au récipient.

33. Dispositif selon l'une quelconque des revendications précédentes, **caractérisé par le fait qu'**il comporte un embout de distribution porté par l'organe de réglage.

34. Dispositif selon la revendication précédente, **caractérisé par le fait que** l'organe de réglage comporte un passage permettant au produit contenu dans le récipient de gagner l'embout de distribution.

35. Dispositif selon l'une des deux revendications précédentes, **caractérisé par le fait que** l'embout de distribution est articulé sur l'organe de réglage.

36. Dispositif selon la revendication précédente, **caractérisé par le fait que** l'organe de réglage comporte une paroi périphérique permettant de masquer un orifice de sortie du produit de l'embout, lorsque ce dernier est dans une première position par rapport à l'organe de réglage, l'embout pouvant basculer pour prendre une deuxième position dans laquelle l'orifice de sortie n'est plus masqué par la paroi périphérique de l'organe de réglage, quand l'utilisateur appuie sur l'embout.

37. Dispositif selon la revendication 33 ou 34, **caractérisé par le fait que** l'embout de distribution est assujetti à une paroi déformable (161 ; 455) permettant un déplacement axial relatif de l'embout de distribution par rapport à l'organe de réglage.

38. Dispositif selon la revendication précédente, **caractérisé par le fait que** ladite paroi déformable présente une forme tubulaire étagée.

39. Dispositif selon l'une des deux revendications précédentes, **caractérisé par le fait que** l'embout entraîne dans son déplacement relativement à l'organe de réglage un obturateur (170 ; 456), agencé pour isoler l'intérieur du récipient de l'extérieur en l'absence d'utilisation du dispositif.

40. Dispositif selon l'une quelconque des revendications précédentes, **caractérisé par le fait qu'**il comporte un embout de distribution et des première (51) et seconde (3) surfaces d'appui situées respectivement de part et d'autre du soufflet (6), afin de permettre à l'utilisateur d'exercer une pression dans l'axe (X) du récipient pour rapprocher lesdites surfaces d'appui et de comprimer le soufflet, l'embout de distribution comportant un orifice de sortie situé à proximité de la première surface d'appui, sur le côté du dispositif.

41. Dispositif selon l'une quelconque des revendications précédentes, **caractérisé par le fait que** l'organe de réglage permet de modifier en continu la course de compression du soufflet et la quantité de produit distribuée.

42. Dispositif selon l'une quelconque des revendications précédentes, **caractérisé par le fait qu'**il est dépourvu de valve.

43. Dispositif selon l'une quelconque des revendications précédentes, **caractérisé par le fait qu'**il est agencé de telle manière que la compression du soufflet résulte d'une poussée exercée par l'utilisateur au moyen de son pouce.

44. Utilisation d'un dispositif tel que défini dans l'une quelconque des revendications précédentes, tête en bas, pour distribuer un produit destiné à être appliqué sur les cheveux.
